(19)

Europäisches
Patentamt
European
Patent Office
Office européen
des brevets

(11) **EP 3 070 453 A1**

(12) **EUROPEAN PATENT APPLICATION**

(43) Date of publication:
**21.09.2016 Bulletin 2016/38**

(51) Int Cl.:
*G01M 5/00* (2006.01)     *G01M 7/08* (2006.01)

(21) Application number: **15000798.7**

(22) Date of filing: **17.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **TÜV SÜD Product Service GmbH 80339 München (DE)**

(72) Inventors:
• **Varro, Werner**
  **83607 Holzkirchen (DE)**
• **Kilian, Thomas**
  **82291 Mammendorf (DE)**
• **Krauss, Walter**
  **82335 Berg (DE)**

(74) Representative: **Grünecker Patent- und Rechtsanwälte PartG mbB Leopoldstraße 4 80802 München (DE)**

(54) **Testing method and test rig for run-over tests**

(57)     The present invention relates to a testing method for run-over tests for a test item 4, such as an electrical plug, connector, cable or enclosure, comprising the steps of: arranging the test item 4 on a test item carrier 2, moving the test item carrier 2 and a rotatably arranged vehicle tire 5 relative to each other with a first relative velocity by sliding at least one of them along a track, such that the rotatably arranged vehicle tire 5 rolls over the test item 4, and determining the condition of the test item 4 after the vehicle tire 5 rolled over the test item. The invention also concerns a test rig 1 for run-over tests of a test item 4, comprising a test item carrier 2, on which the test item 4 may be arranged, and a vehicle tire 5 which is rotatably arranged on a mounting element 6. The test item carrier 2 and the mounting element 6 are moveable relative to each other in a longitudinal direction, such that the rotatably arranged vehicle tire 5 can roll over the test item 4.

FIG. 1

EP 3 070 453 A1

**Description**

The present invention relates to a testing method for run-over tests for a test item such as an electrical plug, connector, cable or enclosure, and to a test rig for run-over tests of such a test item.

In the prior art, it is known to subject test items to pressure to see whether they are resilient enough for their designated application. This may, for example, be obtained by placing a specific weight on a test item or by subjecting test items to a press applying a specific force to them.

In the field of electromobility, it is important to ensure that components in particular related to charging an electrical vehicle, such as electrical plugs, connectors, cables or enclosures, are not damaged. Otherwise, they could pose a potential hazard due to the electrical connectors and wires which should be properly isolated. In particular, electrical vehicles may involuntarily be driven over electrical plugs, connectors, cables, enclosures or the like, while it has to be ensured that even such mistreatment does not significantly damage these components.

It is known in the prior art to provide test rigs for testing tires and related components such as tire mountings and suspensions. DE 10 2011 055 623 A1 discloses an arrangement in which a single wheel is mounted on an arm, provided with additional weights. The arm is arranged on a slide, which is movable along a track. Thus, the tire can be tested in a predefined testing environment without arranging the tire on an actual vehicle.

Furthermore, DE 1 120 757 discloses a drum test rig for vehicles, wherein an obstacle can be drawn by means of a pulling device in between a drum and a wheel. The force on a bearing can be determined by according instruments.

However, the above-mentioned prior art documents do not relate to testing the effects of vehicle wheels on test items apart from car components, but rather relate to the testing of the tires, respectively wheels of the vehicle itself.

It is the object of the present invention to provide a testing method and test rig for according test items, which enable economical, standardized and realistic tests which can be beneficially evaluated.

Thus, the invention provides a testing method for run-over tests for a test item such as an electrical plug, connector, cable or enclosure, wherein the test item is initially arranged on a test item carrier, then the test item carrier and a rotatably arranged vehicle tire are moved relative to each other with a first relative velocity by sliding at least one of them along a track such that the rotatably arranged vehicle tire rolls over the test item, and subsequently determining the condition of the test item after the vehicle tire rolled over the test item. The inventive testing method allows conducting run-over tests according to a standardized norm. At the same time, a realistic modeling of the run-over process is achieved. The testing means can be calibrated and the test rig can be validated ahead of conducting the testing method. Furthermore, it is possible to conduct reference measurements with standardized test items to validate the testing method and/or test rig. Thus, the tests are reproduceable.

The test conditions can be easily adapted to different requirements, in particular with respect to the applied load, velocity and the dynamic behavior.

Thus, with the inventive testing method a test according to specific norms e.g. IEC 62196 can be conducted. This norm requires that a plug or electrical connector has to have a sufficient rigidity against damage when run over by a vehicle, in the case that the plug or connector is not provided with a cable system which prevents that the plug or connector may lie on the ground. According to the norm, the plug should be provided on a concrete floor in a common resting position. A common vehicle tire of the size P225/75R15 or similar is mounted on a steel wheel rim and should be inflated with a pressure of 2.2 +/- 0.1 bar. A force of 5000 +/- 250 Newton should be applied, and the wheel should roll over the plug with a velocity of 8 +/- 2 km/h. The plug should be oriented in a natural resting position, wherein the force should be applied for each test item in a different direction. The plug used as a test item should be preferably held in a fixed position or blocked therein, such that it does not move while the force is applied. However, the force should not be applied to any pins protruding from the plug.

In particular, the test is passed for a test item if no significant cracks, breaks or deformations are present to an extent:

- that other active parts apart from the exposed clamps or internal wiring are accessible to be touched by a standard test finger;

- that the housing is damaged in such a severe manner that no acceptable mechanical protection of the inner parts of the plug or the environment or the reverse polarity protection is ensured;

- that a disturbance of the operation, the functionality and the assembly of the plug is present;

- that plug does not provide a sufficient tear load relief for the flexible cable;

- that leakage current and air distances in between active parts of different polarity, active parts and accessible voltageless or grounded metal parts are reduced under defined values;

- that signs of damage are present, which could increase the danger of a fire or electric shock; and

- that the plug does not pass a repeated dielectric strength test.

The above described test may be repeated with additional test items with an applied force of 11000 +/- 550 Newton with a common vehicle tire, which is suitable for this load and inflated to his dedicated pressure.

Preferably, the step of arranging the test item on a test item carrier in the inventive method comprises fixing the test item on the test item carrier, in particular, using a transparent foil or an adhesive tape.

In particular, the test item carrier moves in a longitudinal direction, which preferably corresponds to a horizontal direction. While the vehicle tire rolls over the test item, the vehicle tire may also move against a predefined resistance and/or load in the transversal direction, which preferably corresponds to the vertical direction. Thus, preferably, the longitudinal direction of the test item carrier movement and the transversal direction of the vehicle tire movement are perpendicular to each other.

In a preferred embodiment of the method, the vehicle tire remains stationary in the longitudinal direction, while the test item carrier moves in the longitudinal direction. However, as already specified, the vehicle tire may slightly move in the transversal direction. The aforementioned preferred embodiment enables that the test item carrier moves while the potentially more complex arrangement of the vehicle tire remains substantially stationary.

Preferably, a second relative velocity in between the test item carrier and the rotatably arranged vehicle tire is measured after the vehicle tire rolled over the test item, and the loss of kinetic energy is calculated. Thus, it can be derived how much energy was absorbed by the interaction in between tire and test item. The energy absorbed by the interaction in between the test item carrier and the tire may be calculated and subtracted. Thus, it can be determined how much energy is actually applied to the test item.

In one embodiment, the testing method comprises determining the force acting on the rotatably arranged vehicle tire. For this purpose, a force sensor may be provided to determine the force which is applied on the rotatably arranged vehicle tire. In particular, the force sensor may be arranged in between the mounting element of the vehicle tire and a support frame.

Determining the force acting on the rotatably arranged vehicle tire allows obtaining further insight on the origin of any potential damages and allows optimizing the design of the test item to potentially avoid peaks in the force.

In one embodiment, the test item may initially be subjected to a simulated aging process, which comprises in particular the application of heat, cold and/or UV light on the test item. If the test item comprises polymers, the polymers may be rendered more brittle by this simulated aging process. It is important that the test items will maintain their required properties for an uncertain amount of time, which can be accounted for by incorporating such a simulated aging process in the testing method.

The invention further provides a test rig for run-over tests of a test item, such as an electrical plug, connector, cable or enclosure, comprising a test item carrier, on which the test item may be arranged and a vehicle tire which is rotatably arranged on a mounting element, wherein the test item carrier and the mounting element are movable relative to each other in a longitudinal direction, such that the rotatably arranged vehicle tire can roll over the test item. Thus, realistic, reproduceable and economical run-over tests can be conducted.

Preferably, a holding means is provided to hold the test item on the surface portion of the test item carrier. In particular, the holding means may be a transparent foil or adhesive tape.

In a preferred embodiment, the test item carrier is provided on a sliding element, which is slidable regarding a track. In particular, the slidability is in a longitudinal direction, which preferably corresponds to a horizontal direction. Thus, the rotatably arranged vehicle tire is in particular fixed in its location in the longitudinal direction, while the test item carrier together with the test item is adapted to slide along the track. This facilitates the run-over tests, as the rotatably arranged vehicle tire may remain substantially stationary. However, in other embodiments, it is also possible that the test item carrier is stationary while the rotatably arranged vehicle tire is movable in the longitudinal direction, in particular along a track. For example, the vehicle tire could be arranged on a mounting element which is slidably provided on a track extending in the longitudinal direction.

The test rig, according to the invention, may also be used for static tests by fixing both the test item carrier and the vehicle tire in the longitudinal direction and by only lowering the tire with a predetermined force in the transversal direction on the test item.

Preferably, the sliding element comprises a slope on its upper front end. The slope serves the purpose of reducing oscillations during the first engagement in between the tire and the sliding element. Furthermore, a slope at the upper rear end of the sliding element may be provided. The rear slope enables that less oscillations are generated when the sliding element fully passes the tire and in particular, the tire is lowered due to gravitational forces.

In one embodiment, the sliding element has a weight in between 500kg and 2500kg, preferable in between 500kg and 2000kg, more preferably in between 1500kg and 2000kg. This weight range of the sliding element enables that the kinetic energy is sufficiently high that a predetermined velocity is maintained during the run-over tests.

In preferred embodiments, the mounting element is adapted to be moveable in a substantially transversal direction, and comprises a weight receiving means, in which additional weight, preferably in the range from 90kg to 1200kg can be provided. The movement in the transversal direction enables that the tire can at least slightly move in the transverse direction allowing the test item to pass, while the additional weight ensures that a sufficient force is applied on the test item during the run-over.

In particular, the mounting element is pivotable around a pivoting axis which is perpendicular to the longitudinal direction and transversal direction. The mounting element is in a distance to the pivoting axis, the distance being sufficient to enable the mounting element to move substantially in the transversal direction without significant movement in the longitudinal direction.

Alternatively, the mounting element may be slidable in the transversal direction, which is in particular the vertical direction. This may be enabled by providing an according transversal track.

A spring may be provided in between the mounting element and a frame, which forces the mounting element together with the rotatably arranged vehicle tire in the transversal direction towards the test item carrier. Thus, a sufficiently high run-over force may be generated. In addition to the spring, a damping element may be provided in between the mounting element and the frame. This enables an even closer model the properties of a vehicle wheel suspension. The spring and/or damper may be adjustable to simulate different wheel suspensions.

Preferably, a force sensor is provided to determine the force which is applied on the rotatably arranged vehicle tire. The force sensor preferably captures forces in the transversal, that is, in particular the vertical direction. The force sensor may additionally capture forces in the longitudinal direction. Thus, not only the magnitude, but also the direction of the force may be determined.

In one embodiment, a high speed camera is provided to capture the effects on the test item during the run-over test. This may, in particular, be beneficial in combination with the signal of the force sensor, wherein the video from the high speed camera and the signal of the force sensor may be synchronized.

In one embodiment, the test item carrier is a removable plate formed in particular of concrete, asphalt, steel or ice. This allows modeling real-world conditions more closely.

In a further embodiment, a microphone may be fixed close or inside the test item to detect scratches. The microphone enables determining the exact time and amount of scratches applied to the test item and therefore, allows evaluating the tests in a more detailed manner.

Furthermore, the test rig may comprise a strain gauge, which is adapted to be fixed on the test item to measure the deformation under the applied load. Thus, the signal of the strain gauge can also be fed to a central evaluation unit and evaluated together with the other signals. Thus, more detailed information on the deformation of the test item during the run-over test can be obtained.

The invention will now be further explained with reference to an exemplary embodiment, which is shown in the figures.

Figure 1 shows a side view of a test rig according to an embodiment of the invention.

Figure 2 shoes a top view of the test rig according to the embodiment of the invention.

Figure 3 shows a perspective view on the test rig according to the embodiment of the invention.

Figure 4 shows the schematical mechanical arrangement directly before the tire runs over a test item.

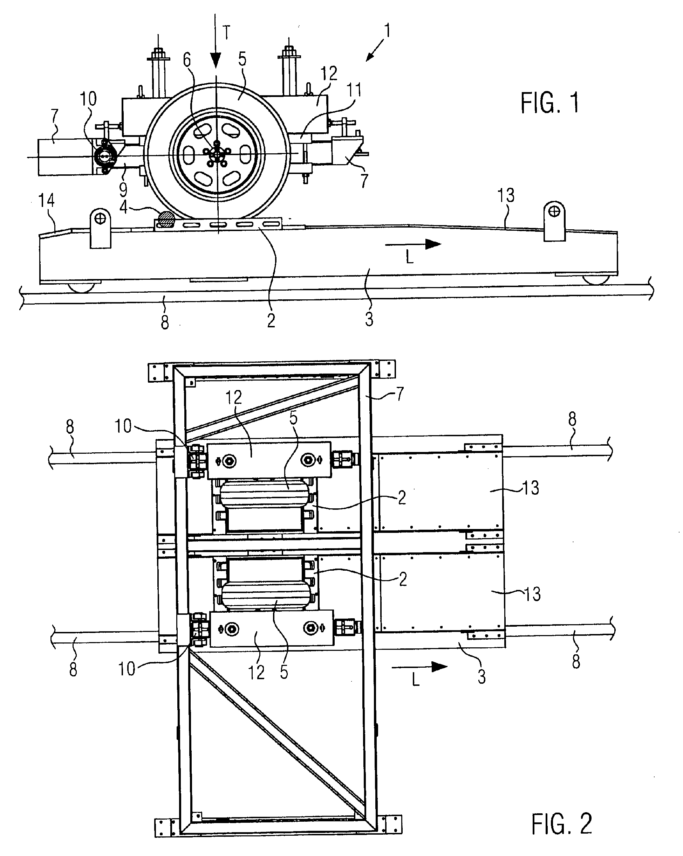

Figure 1 shows a test rig 1 for run-over tests in a schematic side view. The test rig 1 comprises a test item carrier 2 being arranged on a sliding element 3, which is slidable in the longitudinal direction L. On the test item carrier 2, a test item 4, e.g. an electrical plug, is arranged. The test item 4 is preferably fixed by means of adhesive tape or transparent foil to the test item carrier 2. When the sliding element 3, together with the test item carrier and test item 4 slides in the longitudinal direction, the test item 4 moves towards the vehicle tire 5, which is rotatably arranged on a mounting element 6 and which rolls over the surface of initially the sliding element 3 and then the test item carrier 2.

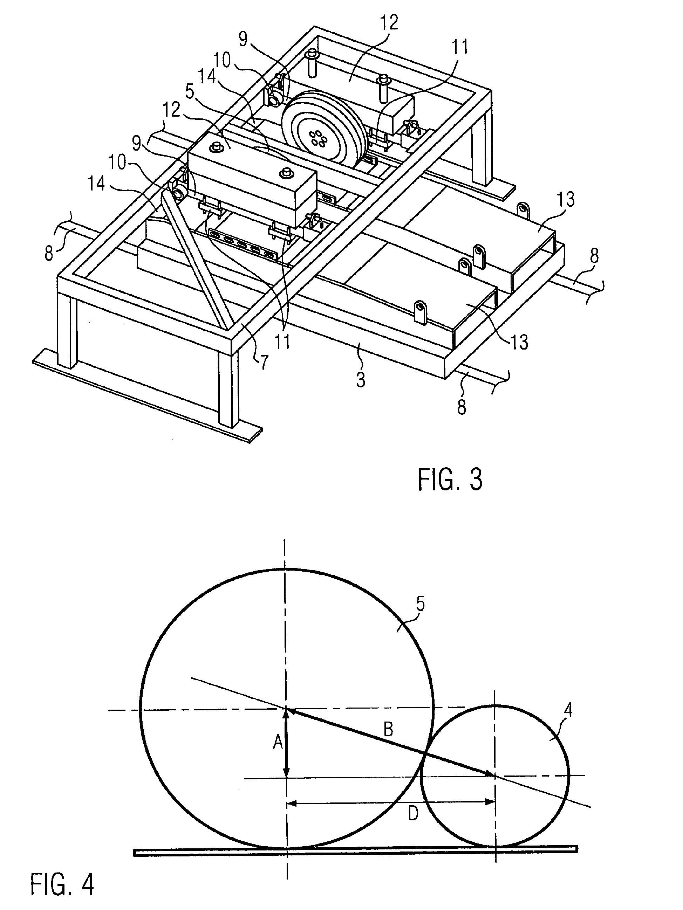

Then, the tire 5 comes into contact with the test item 4 and rolls over the test item 4, while same remains substantially stationary relative to the test item carrier. During the run-over, the tire 5 applies a force in the transversal direction T on the test item 4, wherein the transversal direction T corresponds substantially to the vertical direction. To properly simulate a real run-over process, the mounting element 6 may be arranged movable substantially in the transversal direction T with respect to a frame 7 which can be better seen in Figures 2 and 3. The frame 7 is fixed via a support structure to the ground.

The sliding element 3 is slidable along a track 8 which is fixed to the ground. For this purpose, wheels may be provided on the sliding element 3.

The mounting element 6 is arranged on a lever 9, which is pivotably mounted in a pivot 10. The pivoting motion around the pivot 10 enables the substantially vertical movement of the vehicle tire 5 in the transversal direction T. To enable that sufficient force is provided on the test item 4 during the run-over, the mounting element 6 is provided with a weight receiving means 11, on which weights 12, according to the test requirements, can be easily arranged.

A spring may be provided in between the mounting element 6 and the frame 7, e.g. in the form of a helical spring arranged in between the lever 9 and the top bars of the frame 7 or in the form of a rotational spring arranged in the pivot 10. An additional hydraulic and/or friction damper may be provided. The sliding element 3 provides mounting means on which the test item carrier may be fixed. In particular, the test item carrier 2 is in the form of a removable plate. The plate may be provided with mounting features which match the mounting means of the sliding element 3. For example, the test item carrier 2 may be provided with bores, into which slidable bolts of the sliding element 3 engage, to fix the test item carrier 2 to the sliding element 3.

Furthermore, the sliding element 3 is provided with a front slope 13 on its upper front end. When conducting a run-over test, the sliding element 3 is moved initially against the longitudinal direction in a starting position such that it is arranged in a distance to the tire 5. Then, it is accelerated to the desired first (relative) velocity in the longitudinal direction L and initially, the front slope 13 comes into contact with the tire 5. The front slope 13 enables that the initial contact of the tire 5 with the sliding element 3 does not induce high forces or vibrations, but that the tire 5 rather picks up the speed from the sliding element 3 and rotates without slip on the test item carrier 3 while the test item carrier 2 passes under the vehicle tire 5. Then, the actual run-over over the test item 4 is effected and the tire 5 rolls further on the sliding element and then over the rear slope 14 until the sliding element 3 has fully passed under the tire 5.

The first velocity of the sliding element 3 may be reached by a linear drive or by a motor which pulls the sliding element 3 or drives the wheels on the sliding element 3 which engage the track 8. Preferably, a control is implemented, which enables in particular controlling the velocity of the sliding element 3 in a tolerance range of 0.1 km/h.

In the region of the mounting element 6, a force sensor may be arranged, which monitors the force the tire 5 applies on the test item 2. Usually, a force in between 550kg and 1100kg is applied. In addition, a scale may be provided under the test item carrier 2, and the run-over force may be measured by means of the scale.

A velocity sensor may be provided which monitors exactly the velocity of the sliding element 3. In particular, the velocity sensor provides a velocity measurement before and after the run-over, i.e. measures the first and second velocities. The difference in between the first velocity and second velocity may be used to calculate the loss of kinetic energy, which enables determining the energy absorbed by the tire 5 and test item 4 during run-over.

A displacement sensor may be provided on the mounting element 6. For example, the angle of the lever with respect to the frame 7 may be measured, which allows determining the displacement of the tire 5.

Furthermore, high resolution video cameras may be provided, in particular at the side, in front and behind the tire to monitor the run-over test. All information from the force sensors, scale, video cameras, velocity sensors and displacement sensors can be fed into a central evaluation unit, where they can be evaluated together and in particular displayed on the same time scale to enable a thorough analysis of the run-over test. The testing method and test rig enables conducting run-over tests according to the norms IEC 62196-1, IEC 62752, UL 2251 and SAE J 1772.

The run-over velocity, that is, the velocity of the sliding element with respect to the tire is preferably adjustable from 6 to 30 km/h. The initial velocity is preferably adjusted to a tolerance range of 0.5 km/h. The weight applied to the test item is preferably in the range of 90kg to 1200kg.

The force applied to the test item is determined with an accuracy of below 1%.

The test item carrier has preferably a size of more than 300 x 300mm and less than 900 x 900 mm. Preferably, the test item carrier has a size of about 600 x 600mm.

Liquid may be applied to the test item carrier and/or test item to simulate realistic conditions. The liquid may, in particular, be water or oil.

The test item may be positioned with a tolerance of less than 1 cm when it is arranged without any holding means and with an accuracy of less than 2 mm when using additional measurement means.

In Figure 2, a top view of the test rig 1 can be seen. The test rig 1 is, in this embodiment, provided with two tires in parallel, which are separately pivotable around their respective pivot 10. The sliding element 3 comprises two test item carriers 2. Thus, two run-over tests can be conducted in parallel. Of course, it is possible to only provide one tire or more than two tires, for example, 3, 4, 5, 6, 7, 8, 9 or 10 tires arranged in parallel and the according number of test item carriers 2 to carry out the respective number of run-over tests in parallel.

The arrangement of the parallel tires 5 can be seen in Figure 3, wherein each tire 5 is provided on a separate mounting element 6 with a weight-receiving means 11 on which several weights 12 arranged. As can be further seen in Figure 3, the frame 7 is fixed to the floor via support structures. Under the sliding element 3, rollers are provided, which run on the track 8. Thus, while the frame 7 remains stationary, the sliding element 3 is accelerated to the desired velocity and then passes under the tires 5. In particular, the sliding element 3 is not actively driven during the actual run-over but runs freely.

In Figure 4, the geometrical properties of an exemplary vehicle tire 5 and an idealized test item 4 are shown. The half distance D the tire runs over the idealized test item can be calculated by

$$D = \sqrt{B^2 - A^2}; \quad A = R_r - R_s; \quad B = R_r + R_s$$

with Rr being the diameter of the tire and Rs being the diameter of the test item.

Thus, the run-over time can be calculated by dividing two times the distance D with the velocity of the sliding element 3.

With the run-over time, the velocity and acceleration of the lifting motion of the tire 5 can be calculated.

Furthermore, it is possible to determine the kinetic energy of the sliding element 3 just before the run-over, which is the initial kinetic energy minus the kinetic energy which is supplied from the sliding element 3 to the tire 5 when same come into contact. Using the velocity of the lifting motion, the energy absorbed by the test item 4 can be calculated.

According to an embodiment of the method according to the present invention, test items 4 are provided on the test rig as shown in Figures 1 to 3, in particular on the test item carriers 2 thereof. Then, the test items 4 are fixed to the test item carriers. The sliding element 3 is arranged in a distance to the frame 7 in the longitudinal direction and is accelerated to a predetermined first velocity before the tire 5 comes into contact with the front slope 13 of the sliding element 3. Then, the tire 5, which is previously not rotating, is accelerated to a rotational speed such that it is rolling without slip with the sliding element 3. Then, the tire 5 rolls over the test item 4 and same is subjected to the run-over force. The tire 5 continues to roll on the sliding element 3 and finally over the rear slope 14 before the sliding element 3 has fully passed the frame 7. During the run-over, the forces and displacements are measured with the sensors as discussed and the result is recorded by a central evaluation unit such that it can be displayed and analyzed over the same timeline. Video recordings of the test may be analyzed in parallel.

## Claims

1. Testing method for run-over tests for a test item (4), such as an electrical plug, connector, cable or enclosure, comprising the steps of:

   a) arranging the test item (4) on a test item carrier (2),
   b) moving the test item carrier (2) and a rotatably arranged vehicle tire (5) relative to each other with a first relative velocity by sliding at least one of them along a track, such that the rotatably arranged vehicle tire (5) rolls over the test item (4), and
   c) determining the condition of the test item (4) after the vehicle tire (5) rolled over the test item.

2. Testing method according to claim 1, wherein the vehicle tire (5) remains stationary in the longitudinal direction while the test item carrier (2) moves in the longitudinal direction.

3. Testing method according to claim 1 or 2, comprising determining a second relative velocity in between the test item carrier (2) and the rotatably arranged vehicle tire (5) after the vehicle tire (5) rolled over the test item (4), and calculating the loss of kinetic energy.

4. Testing method according to any one of the previous claims, comprising determining the force acting on the rotatably arranged vehicle tire (5).

5. Testing method according to any one of the previous claims, wherein, before step a), the test item (4) is subjected to a simulated aging process, comprising the application of heat, cold and/or UV light on the test item.

6. Test rig (1) for run-over tests of a test item (4), such as an electrical plug, connector, cable or enclosure comprising a test item carrier (2), on which the test item (4) may be arranged, and a vehicle tire (5) which is rotatably arranged on a mounting element (6), wherein the test item carrier (2) and the mounting element (6) are moveable relative to each other in a longitudinal direction, such that the rotatably arranged vehicle tire (5) can roll over the test item (4).

7. Test rig according to claim 6, wherein the test item carrier (2) is provided on a sliding element (3), which is slidable regarding a track (8).

8. Test rig according to claim 7, wherein the sliding element (3) comprises a slope (13) on its upper front end.

9. Test rig according to claim 7 or 8, wherein the sliding element has a weight of in between 500kg and 2500kg, preferably in between 1500kg and 2000kg.

10. Test rig according to any one of claims 6 to 15, wherein the mounting element (6) is adapted to be moveable in a substantially transversal direction, and comprises a weight receiving means (11), in which additional weight, preferably from 90kg to 1200kg, can be provided.

11. Test rig according to claim 10, wherein the mounting element (6) is pivotable around a pivoting axis which is perpendicular to the longitudinal and transversal direction.

12. Test rig according to claim 10 or 11, wherein a spring is provided in between the mounting element (6) and a frame (7), which forces the mounting element (6) together with the rotatably arranged vehicle tire (5) in the transversal direction towards the test item carrier (2).

13. Test rig according to any one of claims 6 to 12, wherein a force sensor is provided to determine the force which is applied on the rotatably arranged vehicle tire (5).

14. Test rig according to any one of claims 6 to 13, wherein a high speed camera is provided to capture the effects on the test item (4) during the run-over test.

15. Test rig according to any one of claims 6 to 15, wherein the test item carrier (2) is a removable plate, formed in particular of concrete, asphalt, steel or ice.

16. Test rig according to any one of claims 6 to 15, wherein a microphone is fixed close or inside the test item to detect scratches.

17. Test rig according to any one of claims 6 to 16, wherein a strain gauge is adapted to be fixed on the test item to measure the deformation at the applied load.

FIG. 1

FIG. 2

**FIG. 3**

**FIG. 4**

Europäisches
Patentamt

European
Patent Office

Office européen
des brevets

**EUROPEAN SEARCH REPORT**

Application Number

EP 15 00 0798

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 394 061 A (UNIV LIVERPOOL JOHN MOORES [GB]) 14 April 2004 (2004-04-14) | 1,2,4-17 | INV.<br>G01M5/00 |
| A | * See Sections Technical Field (pg. 1) and Example (pg. 4); figure 1 * | 3 | G01M7/08 |
| X | US 4 938 055 A (TSUDA ISAMI [JP]) 3 July 1990 (1990-07-03) | 1,2,4-17 | |
| A | * column 1, line 5 - column 1, line 10; claims 1,2,4-6; figures 1,2 *<br>* column 2, line 10 - column 3, line 5 *<br>* column 4, line 10 - column 5, line 21 * | 3 | |
| X | DE 20 2004 008699 U1 (DEUTSCHE BAHN AG [DE]) 30 September 2004 (2004-09-30) | 1,2,4-17 | |
| A | * paragraph [0002] - paragraph [0005]; claims 3-6; figure 1 *<br>* paragraph [0008] - paragraph [0010] *<br>* paragraph [0016] - paragraph [0021] * | 3 | |
| E | CN 204 359 516 U (NANJING NARI CO LTD) 27 May 2015 (2015-05-27) * the whole document * | 1-17 | TECHNICAL FIELDS SEARCHED (IPC)<br><br>G01M<br>G01N |

The present search report has been drawn up for all claims

| Place of search | Date of completion of the search | Examiner |
|---|---|---|
| The Hague | 31 August 2015 | Foster, Keir |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 00 0798

31-08-2015

| Patent document cited in search report | | Publication date | Patent family member(s) | | Publication date |
|---|---|---|---|---|---|
| GB 2394061 | A | 14-04-2004 | NONE | | |
| US 4938055 | A | 03-07-1990 | NONE | | |
| DE 202004008699 | U1 | 30-09-2004 | AT | 352671 T | 15-02-2007 |
| | | | DE | 20309695 U1 | 13-11-2003 |
| | | | DE 202004008699 U1 | | 30-09-2004 |
| | | | DK | 1491683 T3 | 19-03-2007 |
| | | | EP | 1491683 A2 | 29-12-2004 |
| | | | ES | 2278244 T3 | 01-08-2007 |
| | | | RU | 2351498 C2 | 10-04-2009 |
| CN 204359516 | U | 27-05-2015 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102011055623 A1
- DE 1120757